# FASCICULE DE BREVET EUROPEEN

(11) **EP 1 026 069 B1**
(45) Date de publication et mention de la délivrance du brevet: **10.12.2003**
(21) Numéro de dépôt: 00400272.1
(22) Date de dépôt: 01.02.2000
(51) Int. Cl.: B62D 21/15, B62D 1/19

(54) **Dispositif de protection contre un choc frontal appliqué à la partie avant d'un véhicule automobile**
Schutzvorrichtung gegen einen Frontalaufprall die auf dem Frontteil eines Autos befestigt ist
Protection device against a frontal impact attached to a front part of a car

(30) Priorité: 02.02.1999 FR 9901174
(43) Date de publication de la demande: 09.08.2000
(73) Titulaire: Peugeot Citroen Automobiles SA, 92200 Neuilly sur Seine (FR)
(72) Inventeur: Bocquet, Roger, 78790 Hargeville (FR)
(74) Mandataire: Thinat, Michel

(56) Documents cités:
- FR-A- 2 645 819
- FR-A- 2 653 730
- GB-A- 1 460 122

## Description

La présente invention concerne un dispositif de protection contre un choc frontal appliqué à la partie avant d'un véhicule automobile.

Lors d'un choc frontal violent, la partie avant du véhicule s'écrase et les éléments de la structure du véhicule plient, pouvant amener le groupe motopropulseur du véhicule en contact avec l'obstacle, provoquant alors le recul du groupe motopropulseur vers l'habitacle du véhicule.

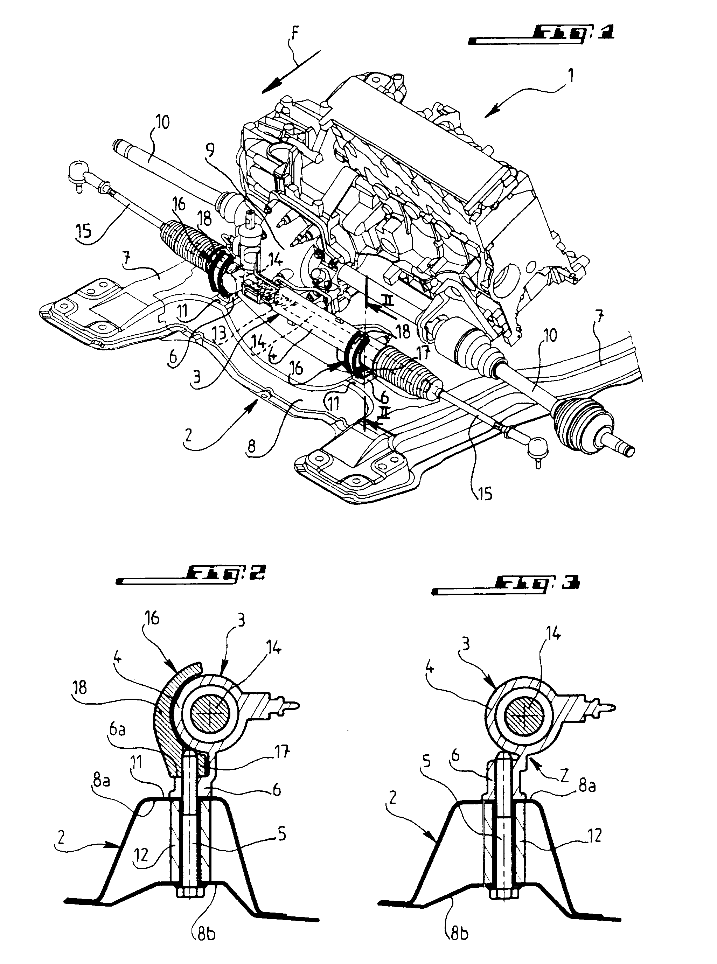

La figure 1 représente le groupe motopropulseur 1 supporté par la structure avant 2 du véhicule. Cette figure montre que lors du recul du groupe motopropulseur 1 dans le sens indiqué par la flèche F, celui-ci rencontre le mécanisme de direction à crémaillère 3 dont le corps ou boîtier 4 est fixé sur la structure 2 par deux organes de liaison filetés 5, dont un seul est représenté dans la vue en coupe de la figure 3. Chaque organe 5 est dans le cas présent constitué par une vis de fixation traversant la structure avant 2 et dont la partie filetée est ancrée dans un trou taraudé d'une bride correspondante 6 du corps 4 du mécanisme de direction 3 de façon à maintenir serrée la bride 6 sur une surface d'appui correspondante de la structure 2. Chaque bride 6 est réalisée en une seule pièce avec le corps du mécanisme de direction 3 généralement en aluminium ou en un alliage d'aluminium. Dans ces conditions, lorsque le groupe motopropulseur 1 rencontre le mécanisme de crémaillère 3, celui-ci se rompt à une zone de rupture indiquée en Z en figure 3 et consitutée par la zone de raccordement entre le corps 4 du mécanisme de direction 3 et la bride de fixation correspondante 6.

Le groupe motopropulseur 1 peut alors continuer son mouvement de recul vers l'habitacle du véhicule et peut aller au-delà du tablier, risquant ainsi de provoquer des blessures graves au conducteur du véhicule, notamment au niveau des jambes de celui-ci.

FR-A-2 645 819 décrit un dispositif de protection contre un choc frontal appliqué à l'avant d'un véhicule automobile, selon lequel un choc violent provoque le recul du groupe motopropulseur dans le compartiment moteur amenant le carter de pont de la transmission aux roues avant à venir en contact avec la crémaillère de direction pour provoquer son pivotement autour de son axe longitudinal par son boîtier de crémaillère tournant autour de cet axe par rapport à une traverse au moyen de deux brides de fixation solidaires de la traverse.

Cependant, ce dispositif connu n'empêche pas le recul du groupe motopropulseur dans le compartiment moteur du véhicule.

La présente invention propose un dispositif de protection permettant d'empêcher efficacement le groupe motopropulseur de pénétrer dans l'habitacle du véhicule lors d'un choc frontal violent de celui-ci.

A cet effet, le dispositif de protection contre un choc frontal appliqué à la partie avant d'un véhicule automobile comprend les caractéristiques de la revendication 1.

Chaque organe de liaison est une vis traversant la structure avant et qui est ancrée successivement dans un trou taraudé de la bride correspondante du corps de crémaillère et un trou taraudé de la bride de la pièce d'arrêt correspondante. Chaque pièce d'arrêt est de préférence en acier forgé du type XC 38 ou AF 56.

Chaque pièce d'arrêt est solidarisée au corps de crémaillère pendant la coulée de celui-ci en fonderie et le corps de crémaillère est en aluminium ou en alliage d'aluminium.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

La figure 1 est une vue en perspective de la structure d'une partie avant à groupe motopropulseur d'un véhicule automobile et comportant le dispositif de protection conforme à l'invention.

La figure 2 est une vue en coupe suivant la ligne II-II de la figure 1 et représentant l'un des moyens du dispositif de protection de l'invention permettant de freiner et/ou d'arrêter le recul du groupe motopropulseur vers l'habitacle du véhicule.

La figure 3 est une vue en coupe semblable à celle de la figure 2 et représentant l'un des moyens de l'art antérieur pour fixer le mécanisme de direction à crémaillère à la structure avant du véhicule.

En se reportant aux figures 1 et 2, la référence 1 désigne un groupe motopropulseur avant d'un véhicule automobile du type à traction avant.

Le groupe motopropulseur 1 est supporté par une structure ou berceau 2 solidaire de la caisse (non représentée) du véhicule, laquelle structure comprend deux longerons 7 réunis l'un à l'autre en arrière du compartiment moteur du véhicule par une traverse 8 sur laquelle est fixé le mécanisme de direction à crémaillère 3, qui est ainsi disposé entre le groupe motopropulseur 1 et l'habitacle du véhicule transversalement à ce dernier.

Le groupe motopropulseur 1 entraîne, par l'intermédaire d'un différentiel 9, les deux arbres 10 de roues avant.

Le corps ou boîtier 4 du mécanisme de direction 3 est fixé sur la traverse 8 de la structure avant 2 par deux brides 6 maintenues serrées sur des surfaces supérieures d'appui correspondantes 11 de la traverse 8 disposées parallèlement au plancher (non représenté) du véhicule, par l'intermédiaire d'organes de liaison filetés 5. Comme représenté en figure 2, chaque organe de liaison 5 est constitué par une vis de fixation traversant la partie creuse de la traverse 8 perpendiculairement à celle-ci et ayant sa partie filetée ancrée dans un trou taraudé de la bride de fixation correspondante 6. Une entretoise 12, traversée par la vis de fixation correspondante 5, est disposée entre les deux parois parallèles supérieure et inférieure 8a, 8b de la traverse 8 afin d'empêcher leur déformation lors du serrage de la bride correspondante 6 sur la surface d'appui supérieure 11 de la paroi supérieure 8a.

Le corps 4 du mécanisme de direction 3 ainsi que les brides de fixation 6 sont réalisés en une seule pièce en aluminium ou en alliage d'aluminium. En outre, la crémaillère 13 comporte de part et d'autre deux tiges rigides 14 à section transversale circulaire, montées coulissantes dans le corps 4 du mécanisme 3 et formant avec la crémaillère une barre rigide indéformable, par exemple, en acier. Les deux tiges 14 sont reliées aux deux biellettes 15 qui sont articulées à leurs extrémités aux pivots de roues avant.

Selon l'invention, un dispositif est prévu sur la structure avant 2 du véhicule pour freiner et/ou arrêter le déplacement du groupe motopropulseur 1 vers l'habitacle du véhicule en cas de recul du groupe lors d'un choc frontal violent appliqué à la partie avant du véhicule.

Ce dispositif comprend deux pièces d'arrêt 16 en un matériau rigide indéformable, de préférence en acier forgé du type XC 38 ou AF 56, comprenant chacune une bride 17 maintenue en appui serré sur une surface d'appui supérieure 6a de la bride correspondante 6 du corps 4 par la vis de fixation correspondante 5, dont la partie filetée est ancrée également dans un trou taraudé de la bride 17. La bride 17 est logée sur la bride 6 dans une ouverture de forme conjuguée dans la zone de raccordement entre le corps 4 du mécanisme 3 et la bride 6 de façon à rigidifier totalement cette zone. Chaque pièce d'arrêt 16 comprend en outre une butée 18 faisant saillie de la paroi supérieure 8a de la structure avant 2 d'une hauteur au moins égale et de préférence supérieure à la hauteur de la barre indéformable formée par la crémaillère 13 et la tige 14 relativement à la paroi 8a. Chaque butée 18 est disposée derrière le corps 4 du mécanisme de direction à crémaillère 3 en appui sur celui-ci et présente, de préférence, la forme d'une patte approximativement semi-circulaire épousant la paroi arrière cylindrique correspondante du corps 4, la patte s'étendant en outre dans un plan sensiblement vertical parallèle à l'axe longitudinal du véhicule.

Chaque pièce d'arrêt 16 peut être inserée au corps de crémaillère 4 pendant la coulée en fonderie de celui-ci, ce qui permet d'obtenir un ensemble en une seule pièce, facilitant de la sorte le montage en chaîne de l'ensemble sur la structure avant du véhicule.

Le fonctionnement du dispositif de protection ressort déjà de la description qui en a été faite ci-dessus et va être maintenant expliqué.

Lors d'un choc violent par l'avant du véhicule, le groupe motopropulseur 1 peut être déplacé vers l'habitacle du véhicule. Dans ce cas, lorsque le groupe motopropulseur 1 atteint le mécanisme de crémaillère 3, il écrase le corps 4 de celui-ci, mais le groupe motopropulseur est freiné, voir même complètement arrêté, quand les tiges indéformables 14 viennent en appui sur les deux butées 18 des pièces d'arrêt 16, qui s'opposent au recul de ce groupe, empêchant de la sorte l'introduction du groupe dans l'habitacle du véhicule.

Le dispositif de protection contre un choc frontal de l'invention est extrêmement simple, léger, peu encombrant et d'une masse relativement faible par rapport aux dispositifs connus jusqu'à maintenant. Ce dispositif peut être utilisé pour toutes les versions d'un véhicule et même sur plusieurs véhicules différents si ceux-ci utilisent le même mécanisme de direction à crémaillère.

## Revendications

1. Dispositif de protection contre un choc frontal appliqué à la partie avant d'un véhicule automobile, ladite partie comprenant une structure (2) solidaire de la caisse du véhicule et supportant un groupe motopropulseur (1) et un mécanisme de direction à crémaillère (3), dont le corps (4) est fixé à la structure (2) entre le groupe motopropulseur (1) et l'habitacle du véhicule transversalement à celui-ci par au moins deux organes de liaison filetés (5) serrant chacun une bride de fixation (6) du corps de crémaillère (4) sur une surface d'appui (11) de la structure avant (2), la crémaillère (13) comportant de part et d'autre deux tiges rigides (14) reliées aux biellettes (15) des pivots de roues pour former une barre en un matériau indéformable, tel que de l'acier, le dispositif comprenant deux pièces d'arrêt (16) en un matériau rigide indéformable empêchant le recul vers l'habitacle du groupe motopropulseur (1) lors d'un choc frontal du véhicule et comprenant respectivement deux brides (17) maintenues serrées en appui respectivement sur les deux brides de fixation (6) du corps de crémaillère (4) par les deux organes de liaison filetés (5) et deux butées (18) faisant saillie de la structure avant (2) en arrière du corps de crémaillère (4) d'une hauteur au moins égale à la hauteur relative de la crémaillère(13) de façon que lors du recul du groupe motopropulseur (1), la barre indéformable (13, 14) vienne en appui sur les deux butées (18) qui s'opposent au recul du groupe motopropulseur (1) pour le freiner et/ou l'arrêter, la butée (18) de chaque pièce d'arrêt (16) étant en forme de patte approximativement semi-circulaire épousant la paroi arrière cylindrique correspondante du corps de crémaillère (4) et s'étendant dans un plan sensiblement vertical.

2. Dispositif selon la revendication 1, **caractérisé en ce que** chaque organe de liaison précité est une vis (5) traversant la structure avant (2) et qui est ancrée successivement dans un trou taraudé de la bride correspondante (6) du corps de crémaillère (4) et un trou taraudé de la bride (17) de la pièce d'arrêt correspondante (16).

3. Dispositif selon l'une des revendications précédentes, **caractérisé en ce que** chaque pièce d'arrêt (16) est un acier forgé du type XC 38 ou AF 56.

4. Dispositif selon l'une des revendications précédentes, **caractérisé en ce que** chaque pièce d'arrêt (16) est solidarisée au corps de crémaillère (4) pendant la coulée de celui-ci en fonderie.

5. Dispositif selon la revendication 4, **caractérisé en ce que** le corps de crémaillère (4) est en aluminium ou en un alliage d'aluminium.

## Claims

1. A device for protecting from a front collision applied to the front part of a motor vehicle, said part comprising a structure (2) integral with the vehicle body and supporting a powertrain (1) and a rack steering mechanism (3), the casing (4) of which is secured to the structure (2) between the powertrain (1) and the passenger compartment of the vehicle, transversely thereto, by at least two threaded connecting members (5) respectively holding a clamp (6) of the rack casing (4) on a bearing surface (11) of the front structure (2), the rack (13) comprising on either side two solid rods (14) connected to the tie rods (15) of the wheel pins so as to create a bar of dimensionally stable material, such as steel, the device comprising two locking parts (16) made of solid, dimensionally stable material preventing the powertrain (1) from recoiling towards the passenger compartment in case of a front collision of the vehicle, and comprising respectively two flanges (17) held tight in bearing respectively against the two clamps (6) of the rack casing (4) by means of the two threaded connecting members (5) and two stops (18) protruding from the front structure (2) at the back of the rack casing (4) by a height at least equal to the relative height of the rack (13), whereby when the powertrain (1) recoils the dimensionally stable bar (13, 14) is abutting against the two stops (18) opposing the recoil of the powertrain (1) so as to brake and/or stop it, with the stop (18) of each locking part (16) having the shape of an approximately semicircular tab adapting to the cylindrical back wall of the rack casing (4) and extending in a substantially vertical plane.

2. The device according to claim 1, **characterized in that** each above mentioned connecting member is a screw (5) going through the front structure (2) and being anchored successively inside a threaded hole of the corresponding clamp (6) of the rack casing (4) and a threaded hole of the flange (17) of the corresponding locking part (16).

3. The device according to any of the preceding claims, **characterized in that** each locking part (16) is type XC 38 or AF 56 forged steel.

4. The device according to any of the preceding claims, **characterized in that** each locking part (16) is made integral with the rack casing (4) during casting thereof at the foundry.

5. The device according to claim 4, **characterized in that** the rack casing (4) is made of aluminum or aluminum alloy.

## Patentansprüche

1. Vorrichtung zum Schutz gegen einen auf das Vorderteil eines Kraftfahrzeugs angewendeten Frontalzusammenstoß, wobei das Vorderteil ein Gefüge (2) umfasst, das mit dem Wagenkasten einstückig ist und ein Triebwerk (1) und eine Zahnstangenlenkung (3) trägt, deren Hauptstück (4) an dem Gefüge (2) zwischen dem Triebwerk (1) und dem Fahrgastraum des Fahrzeugs quer dazu durch mindestens zwei mit Außengewinde versehenen Verbindungsorganen (5) befestigt ist, die jeweils eine Befestigungsschelle (6) des Zahnstangenhauptstücks (4) auf einer Stützfläche (11) des Vordergefüges (2) festhalten, wobei die Zahnstange (13) auf beiden Seiten zwei starre Spindeln (14) umfasst, die mit den Schwingarmen (15) der Radbolzen verbunden sind, um eine Stange aus einem maßbeständigen Material, wie etwa Stahl, zu bilden, wobei die Vorrichtung zwei Raststücke (16) aus einem starren, maßbeständigen Material umfasst, welche bei einem Frontalzusammenstoß des Fahrzeugs den Rückstoß des Triebwerks (1) gegen den Fahrgastraum verhindern und jeweils zwei Flansche (17) umfassen, die jeweils auf den beiden Befestigungsschellen (6) des Zahnstangenhauptstücks (4) aufliegend von den beiden mit Außengewinde versehenen Verbindungsorganen (5) und zwei Anschlägen (18), die über das Vordergefüge (2) hinten an dem Zahnstangenhauptstück (4) um eine Höhe hervorragen, die mindestens gleich der relativen Höhe der Zahnstange (13) ist, fest gehalten werden, so dass beim Rückstoß des Triebwerks (1) die maßbeständige Stange (13, 14) auf den beiden Anschlägen (18) aufzuliegen kommt, die dem Rückstoß des Triebwerks (1) entgegenwirken, um diesen abzubremsen und/oder anzuhalten, wobei der Anschlag (18) eines jeden Raststücks (16) die Form einer etwa halbkreisförmigen Lasche aufweist, die sich der entsprechenden zylindrischen Rückwand des Zahnstangenhauptstücks (4) anpasst und sich in einer im Wesentlichen senkrechten Ebene erstreckt.

2. Vorrichtung nach Anspruch 1, **dadurch gekennzeichnet, dass** jedes oben genannte Verbindungsorgan eine Schraube (5) ist, die durch das Vordergefüge (2) geht und nacheinander in einem mit einem Innengewinde versehenen Loch der entsprechenden Schelle (6) des Zahnstangenhauptstücks (4) und einem mit einem Innengewinde versehenen Loch des Flansches (17) des entsprechenden Raststücks (16) verankert ist.

3. Vorrichtung nach einem der vorhergehenden Ansprüche, **dadurch gekennzeichnet, dass** jedes Raststück (16) Schmiedestahl der Art XC 38 oder AF 56 ist.

4. Vorrichtung nach einem der vorhergehenden Ansprüche, **dadurch gekennzeichnet, dass** jedes Raststück (16) beim Vergießen in der Gießerei mit dem Zahnstangenhauptstück (4) einstückig gemacht wird.

5. Vorrichtung nach Anspruch 4, **dadurch gekennzeichnet, dass** das Zahnstangenhauptstück (4) aus Aluminium oder einer Aluminiumlegierung besteht.
